# EUROPEAN PATENT SPECIFICATION

(11) **EP 2 361 827 B1**
(45) Date of publication and mention of the grant of the patent: **17.04.2019**
(21) Application number: 11154892.1
(22) Date of filing: 17.02.2011
(51) Int. Cl.: B62M 7/12, B60L 3/04, B60L 11/18

(54) **Electric motorcycle**
Elektromotorrad
Motocyclette électrique

(30) Priority: 19.02.2010 JP 2010034231
(43) Date of publication of application: 31.08.2011
(73) Proprietor: Yamaha Hatsudoki Kabushiki Kaisha, Shizuoka-ken Shizuoka 438-8501 (JP)
(72) Inventor: Nishiyama, Motokuni, Shizuoka-ken Shizuoka 2500 (JP); Fujishiro, Masaya, Shizuoka-ken Shizuoka 2500 (JP); Fujita, Hirokazu, Shizuoka-ken Shizuoka 2500 (JP); Terada, Junji, Shizuoka-ken Shizuoka 2500 (JP)
(74) Representative: Zimmermann, Tankred Klaus

(56) References cited:
- EP-A1- 1 132 251
- EP-A1- 1 223 653
- EP-A2- 0 644 079
- EP-A2- 1 086 847
- EP-A2- 1 407 918
- EP-A2- 1 481 881
- DE-A1- 19 535 294
- US-A1- 2006 091 858

## Description

### Field of the Invention

The present invention relates to electric motorcycles, and more specifically to an electric motorcycle chargeable by an external power source.

### Description of the Related Art

A so-called plug-in type electric motorcycle has been proposed in WO2004/069638 for example. A plug-in electric motorcycle is equipped with an electric charger in its body so that a battery mounted on the electric motorcycle can be charged by an external power source without removing the battery from the motorcycle body. When charging the battery after removing it from the motorcycle body, charging is often performed in an indoor environment using an electric charger installed in a building, in view of protection from elements such as water. On the other hand, when charging a battery while the battery and a battery charger are mounted on the motorcycle body, charging will often be performed in an outdoor environment for reasons of reduced conveniences such as a lack of sufficient parking room for the vehicle to park during the indoor charging operation. In addition to this, the user who came back home will start outdoor charging, and then often want to enter the house and stay there, leaving his motorcycle unattended during the charging operation.

JP-A 2009-60728 discloses an electric vehicle (automobile) which is capable of being charged while its battery and the electric charger are onboard. In order to ensure that the user will notice a charging abnormality, JP-A 2009-60728 discloses an arrangement that the user will be notified of the charging abnormality (by means of a lamp and/or an audible signal) in accordance with the user's start-up operation of the vehicle.

EP 1 481 881 A2, which shows the preamble of claim 1, describes an electric motorcycle having a battery for supplying power to a motor and a charging and voltage conversion apparatus for charging the battery. A charging cable for energizing the charging and voltage conversion apparatus is disposed in a hollow portion of a vehicle body frame.

### SUMMARY OF THE INVENTION

It is an object of the present invention to provide an electric motorcycle which includes a battery and a charger for on-board charging of the battery, and is capable of reliably notifying the user of a charging abnormality.

This object is achieved by an electric motorcycle according to claim 1.

According to an aspect of the present invention, there is provided an electric motorcycle which is chargeable by an external power source, including: a battery for storing electricity for driving the electric motorcycle; an electric charger for charging the battery with electricity supplied from the external power source; an abnormality determiner for determining whether or not there is an abnormality in charging the battery by the external power source; a storage for storing charging abnormality information as an indicator of a charging abnormality incidence upon determination by the abnormality determiner of a presence of a charging abnormality; a controller for controlling operation of the electric motorcycle; a first input device for issuing a command to switch on/off the controller; and a second input device for issuing a command to move the electric motorcycle. With this arrangement, the controller disables the electric motorcycle even if a switch-on command for the controller is issued from the first input device and a move command for the electric motorcycle is issued from the second input device as long as the charging abnormality information is stored in the storage.

In the present invention, if there is an abnormality while the battery is being charged by the external power source, charging abnormality information, which serves as a record of incidence of the charging abnormality, is stored in the storage. As long as the charging abnormality information is stored in the storage, the electric motorcycle is disabled even if the first input device issues a switch-on command of the controller and the second input device issues a move command of the electric motorcycle. As understood, even if the user intends to use the electric motorcycle and makes necessary operations, the electric motorcycle is disabled and the user can assuredly recognize that something went wrong during the charging even if he/she is not provided with visual and/or audible notification of the charging abnormality. Therefore, the arrangement is capable of reliably notifying the user of a charging abnormality, in an electric motorcycle which includes a battery and a battery charger for on-board charging of the battery.

Preferably, the electric motorcycle further includes an enabler for enabling the electric motorcycle, and the controller determines whether or not to enable the electric motorcycle based on a command from the enabler. In this case, the arrangement includes user involvement, i.e., the user is supposed to perform an enabling operation to the electric motorcycle in order to enable the electric motorcycle. By demanding such an involvement by the user that he/she must perform an additional operation for enabling the motorcycle, the arrangement makes sure that the user will have a clear recognition that something went wrong while the battery was being charged.

Further preferably, the enabler includes the first input device, and the controller enables the electric motorcycle in accordance with a switch-on command and a following switch-off command from the first input device. In this case, the disabled electric motorcycle can easily be enabled by issuing a switch-on command for the controller and then a switch-off command therefor, from the first input device.

Further, preferably, the enabler includes the first input device, and the controller determines whether or not to enable the electric motorcycle based on a comparison between a predetermined amount of time and an amount of time elapsed from a previous switch-on command to a current switch-on command from the first input device. It will be appropriate to take as a general assumption that when a switch-on command for the controller from the first input device is issued after parking or stopping the motorcycle for a battery charging operation, a certain large amount of time has elapsed from the previous switch-on command for the controller. Based on this assumption, if a switch-on command for the controller is received from the first input device within a predetermined amount of time (or in a shorter amount of time) after the previous moment when a switch-on command was received, the new switch-on command is determined to be an ENABLE command, and the motorcycle is enabled. In this case, the user can enable the electric motorcycle easily by issuing a switch-on command within (or in a shorter amount of time than) the predetermined amount of time after the previous switch-on command.

Preferably, the enabler includes a third input device which is other than the first input device, and the controller enables the electric motorcycle in accordance with a command from the third input device. In this case, the user can enable the disabled electric motorcycle easily by simply issuing a command from the third input device which is a different input device other than the first input device.

Further preferably, the controller enables the electric motorcycle by deleting the charging abnormality information from the storage. In this case, the disabled electric motorcycle can easily be enabled by simply deleting the charging abnormality information.

Further, preferably, electric motorcycle further includes a fourth input device for issuing a command to start the electric motorcycle; and the controller disables the electric motorcycle even if a switch-on command for the controller is issued from the first input device and a start command for the electric motorcycle is issued from the fourth input device as long as the charging abnormality information is stored in the storage. The arrangement makes sure that the user will have a more assured recognition that there is a charging abnormality.

It should be noted here that the term "charging abnormality" means a failure in charging a battery to a fully charged state (e.g. 98% or higher charge rate) caused by whatsoever phenomenon (such as abnormal temperature, a tripped circuit breaker, etc.) that has terminated the charging process.

The invention is advantageous as it ensures that a user becomes aware of any abnormality during the charging. Sometimes, the charging operation of the battery does not proceed properly, and ends up in an abnormal state. In indoor charging where the battery is removed from the motorcycle body and charged by an electric charger installed inside the building, the state of charging is likely to be seen by someone in the house, and there is a relatively high chance for an abnormal charging state to be noticed. On the other hand, in outdoor charging where a battery and an electric charger are on the motorcycle body during a charging operation, there will be greater chances for the user to stay in the house or otherwise un-attend the charging operation, and therefore not be aware if there is any abnormality during the charging.

Further, the invention is advantageous as it allows for reliably delivering a notification to a user that a charging abnormality occurred despite that fact that the technique described in JP-A 2009-60728 may not be conveniently applied to electric motorcycles since electric motorcycles have a smaller vehicle body, which makes it difficult to provide space for the display lamp, and so it is difficult to provide a large (eye-catching) lamp. It would be a good idea, especially, to use the motorcycle's meter to display charging abnormalities, but the motorcycle's meter is small, so the meter can fail to deliver a charging abnormality notification. Audible notification can be useful in automobiles since an automobile provides a closed space as soon as the user sits on the seat and closes the door. On a motorcycle, however, the rider's seat is open to all four directions and there is no closed-room environment, so it is likely that the user will miss the notification sound.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a left side view of an electric motorcycle according to an embodiment of the present invention.
Fig. 2 is a block diagram showing a main electric configuration of the electric motorcycle in Fig. 1.
Fig. 3 is a flowchart showing an example of battery charging operation.
Fig. 4 is an explanatory drawing, showing an example of meter display during a battery charging operation.
Fig. 5 is a flowchart of a start-up process of the electric motorcycle in Fig. 1, showing an example of operations by the user, responses by the control unit and notifications to the user.
Fig. 6 is an explanatory drawing, showing examples of meter display (during normal charging and abnormal charging) when the electric motorcycle is in use.
Fig. 7 is a flowchart showing another example of start-up operation of the electric motorcycle in Fig. 1.
Fig. 8 is a flowchart showing an example of processing in Step S53 in Fig. 5.
Fig. 9 is a waveform chart showing an example of components interaction timing.

### DETAILED DESCRIPTION OF THE PREFERRED EMBODIMENTS

Hereinafter, embodiments of the present invention will be described with reference to the drawings.

It is noted that the terms right and left, front and rear, up and down as used in embodiments of the present invention are determined from the user's position on a seat 38 of an electric motorcycle 10, with the user facing toward a handlebar 24.

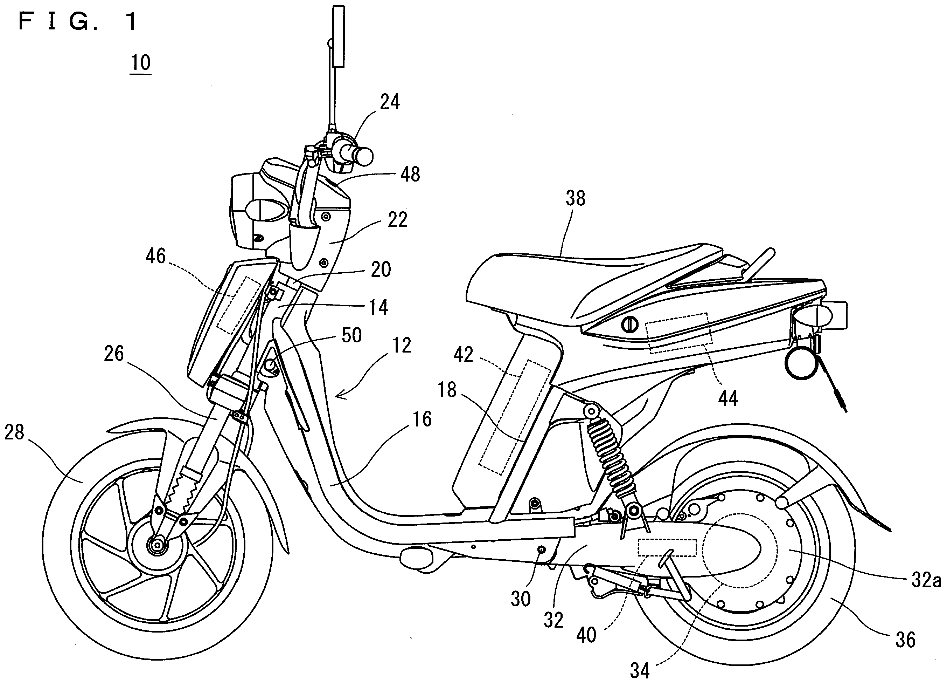

Referring to Fig. 1, the electric motorcycle 10 according to an embodiment of the present invention includes a motorcycle body frame 12. The motorcycle body frame 12 has a head pipe 14; a front frame 16 extending from the head pipe 14 in an obliquely rearward and downward direction; and a rear frame 18 connected with a rear portion of the front frame 16 and erected in an obliquely rearward and upward direction.

A steering shaft 20 is pivotably inserted through the head pipe 14. The steering shaft 20 has an upper end mounted with a handlebar supporting portion 22. A handlebar 24 is fixed to the handlebar supporting portion 22. The steering shaft 20 has a lower end mounted with a front fork 26. A front wheel 28 is rotatably mounted to lower ends of the front fork 26.

The front frame 16 has a rear end portion, to which a fore end portion of a rear arm 32 is mounted via a pivot shaft 30 so that the rear arm 32 is pivotable thereto. The rear arm 32 has a rear end portion 32a which incorporates a motor 34. The motor 34 is connected with a rear wheel 36 for driving thereby rotating the rear wheel 36. Also, the rear frame 18 supports the seat 38.

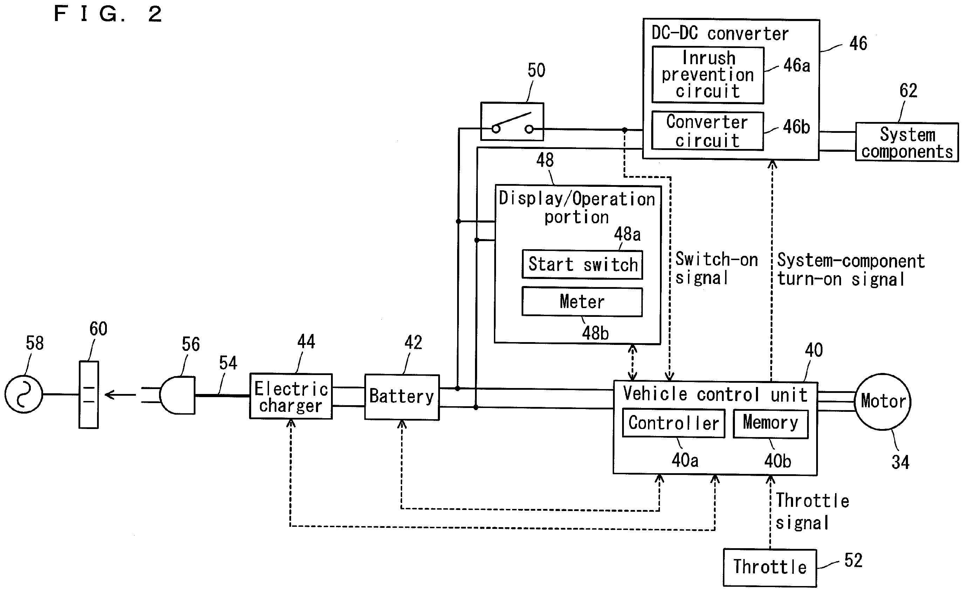

Referring also to Fig. 2, the rear arm 32 incorporates a vehicle control unit 40. A battery 42 is provided near the rear frame 18, and an electric charger 44 is provided below the seat 38. Also, a DC-DC converter 46 is provided ahead of the head pipe 14, a display/operation portion 48 is provided at an upper end of the handlebar supporting portion 22, and a main switch 50 is provided near a connection between the head pipe 14 and the front frame 16. Further, a throttle 52 is provided in the right-hand portion of the handlebar 24.

Also, a charger cable 54 which is connected with the electric charger 44 is stored below the seat 38. The charger cable 54 has a plug 56, which may be plugged into a power outlet 60 of an external power source 58 provided by a commercial power source for example, whereby it is possible to charge the battery 42. As described, the electric motorcycle 10 is a so-called plug-in type electric motorcycle which is chargeable by an external power source 58.

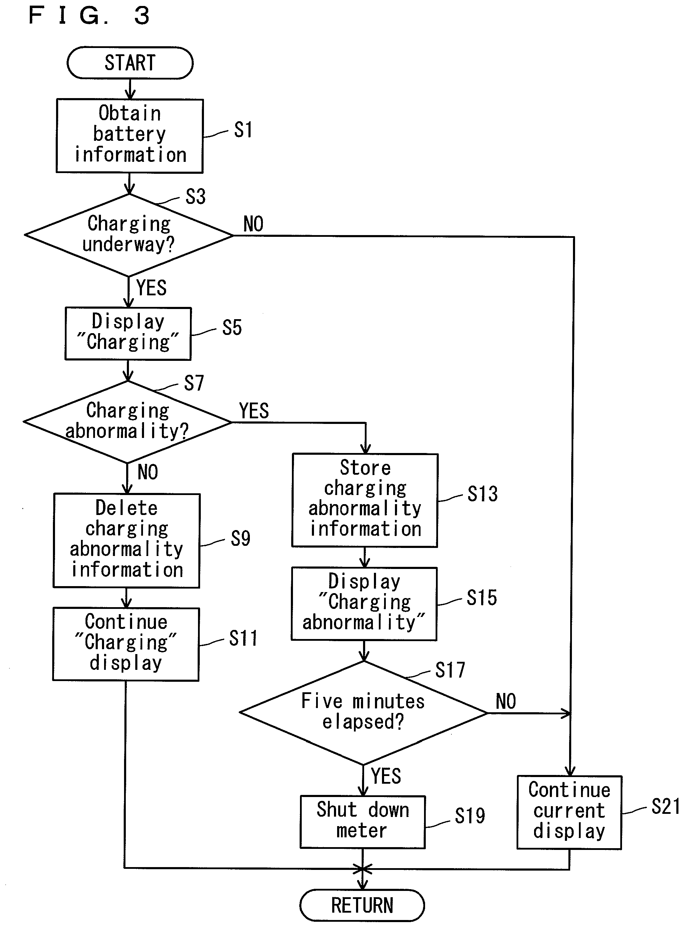

The vehicle control unit 40 is electrically connected with the motor 34 and the battery 42, and includes a controller 40a and a memory 40b. The controller 40a controls operation of the electric motorcycle 10, including control on rotation drive of the motor 34. The memory 40b stores programs and data for performing operations shown in Fig. 3, Fig. 5, Fig. 7 and Fig. 8. Also, the memory 40b stores charging abnormality information as an incident record of a charging abnormality.

The battery 42 is a direct-current power source which stores electric power for driving the electric motorcycle 10. The power from the battery 42 is supplied to the DC-DC converter 46 and the display/operation portion 48. Also, the power is converted into an alternating current by the vehicle control unit 40 and then supplied to the motor 34.

The electric charger 44 charges the battery 42 with electric power supplied from the external power source 58.

The DC-DC converter 46 includes an inrush prevention circuit 46a and a converter circuit 46b, and converts an output voltage from the battery 42 into a low voltage (e.g. from 48 volts to 12 volts) for use by various system components 62 such as a head light and tail lamp.

The display/operation portion 48 is connected with the battery 42 in parallel with the vehicle control unit 40. The display/operation portion 48 includes a start switch 48a for issuance of a start command of the electric motorcycle 10, and a meter 48b for notification of charging state such as normal/abnormal charging and other information. The meter 48b is connected with the motor 34 via the vehicle control unit 40, performs various data measurement on the motor 34, and displays the measured data. In the present description, the expression "the electric motorcycle 10 starts" refers to a state of the electric motorcycle 10 in which the electric motorcycle 10 is ready to run and will start moving only if the throttle 52 is operated. Specifically, this is a state where charging is complete, the main switch 50 is turned ON, and then the start switch 48a is turned ON. Under this state, the controller 40a is ready to receive throttle signals from the throttle 52. As the controller 40a receives throttle signals, the controller 40a drives the motor 34 in accordance with the throttle signals, and the electric motorcycle 10 begins moving (running).

The main switch 50 is provided between the battery 42 and the DC-DC converter 46. As the main switch 50 is turned ON, a switch-on signal is sent to the controller 40a to switch on the controller 40a. If charging abnormality information is stored in the memory 40b, the controller 40a disables the electric motorcycle 10. On the other hand, when the main switch 50 is turned OFF, the controller 40a is switched OFF, and the electric motorcycle 10 is shut down. As described, an ON/OFF operation on the main switch 50 issues a command to switch on/off the controller 40a.

The throttle 52 issues a move command of the electric motorcycle 10. Throttle signals which indicate the amount of rotating operation on the throttle 52 are supplied from the throttle 52 to the controller 40a.

In the present embodiment, the controller 40a also functions as the abnormality determiner. The memory 40b represents the storage. The main switch 50 represents the first input device, and the enabler includes the main switch 50. The throttle 52 represents the second input device, and the start switch 48a represents the fourth input device.

Next, an example of charging operation in the electric motorcycle 10 will be described with reference to Fig. 3.

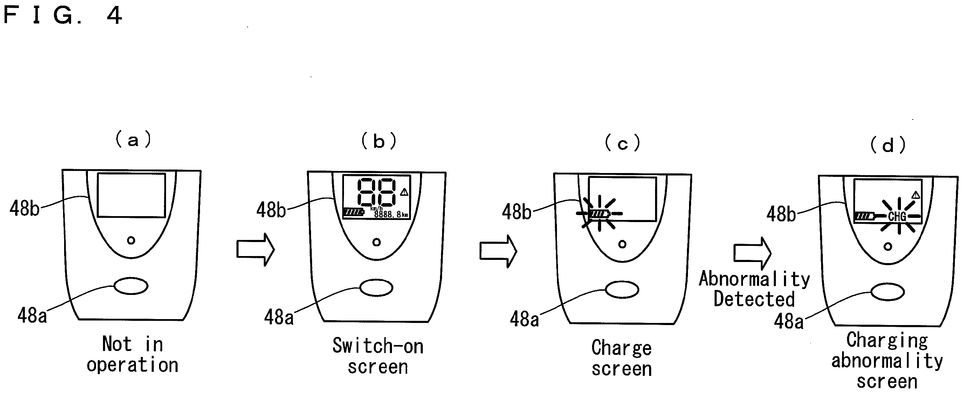

Before charging the electric motorcycle 10, the main switch 50 is turned OFF. Then, the charging operation starts with flipping the seat 38 open to pull out the charger cable 54 from below the seat 38, and connecting the plug 56 of the charger cable 54 with a power outlet 60 of an external power source 58. Then, the meter 48b is switched ON, and display in the meter 48b changes from a state shown in Fig. 4(a) to a state shown in Fig. 4(b).

Under this state, the controller 40a first monitors the battery 42 to obtain battery information (Step S1). An example of the battery information is an amount of electric charge stored in the battery 42. Then, based on the battery information obtained, the controller 40a determines whether or not the battery 42 is being charged by the external power source 58 (Step S3). Whether or not the battery 42 is being charged can be determined by, for example, checking if the battery 42 is connected with the external power source 58 and if the battery 42 is not fully charged.

If the battery 42 is being charged, the controller 40a makes the meter 48b to display that charging is underway (Step S5) . At this point, display in the meter 48b changes from the state shown in Fig. 4(b) to a state shown in Fig. 4(c), and a charge level indicator starts blinking.

Then, based on the battery information, the controller 40a determines whether or not there is any abnormality in the charging of the battery 42 by the external power source 58 (Step S7). The determination can be made by, for example, checking if the amount of charge in the battery 42 is increasing or not.

If no abnormality is found during the charging, the controller 40a deletes the charging abnormality information from the memory 40b (Step S9). If there is no charging abnormality information stored in the memory 40b, the controller 40a maintains this state, and then makes the meter 48b continue with the CHARGING UNDERWAY display (Step S11). During this process, display in the meter 48b maintains the state shown in Fig. 4(c). Thereafter, the process makes a return.

On the other hand, if Step S7 finds an abnormality during the charging, the controller 40a stores charging abnormality information, which is a record of the incidence, in the memory 40b (Step S13), and makes the meter 48b display the incidence of charging abnormality (Step S15). At this point, display in the meter 48b changes from the state shown in Fig. 4(c) to a state shown in Fig. 4(d), and a word symbol "CHG" starts blinking.

The controller 40a determines whether or not five minutes have elapsed since the charging abnormality display was turned on (Step S17). If five minutes have elapsed, the meter 48b is shut down to terminate the charging abnormality display (Step S19), and the program makes a return.

On the other hand, if Step S3 determines that charging is not underway, or Step S17 determines that the five minutes have not elapsed yet, the controller 40a makes the meter 48b continue with the ongoing display (Step S21), and then the program makes a return.

When the battery 42 is fully charged, charging of the battery 42 is automatically stopped. If the charger cable 54 is connected with the external power source 58 under a full-charge state, the meter 48b displays the charge screen shown in Fig. 4(c), and then shuts down in a few minutes. If the charger cable 54 is unplugged during the charging operation, the meter 48b is shut down.

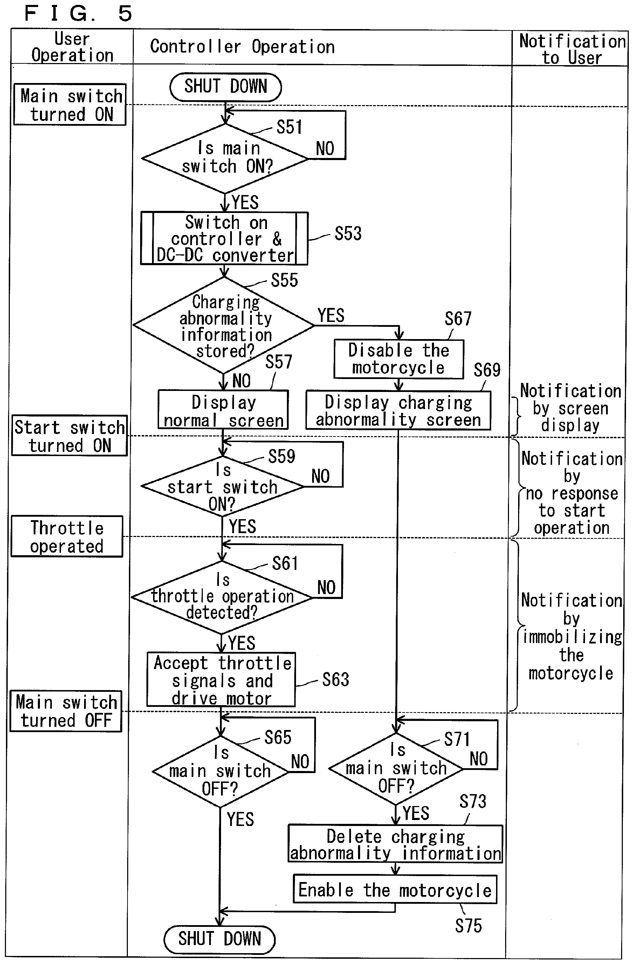

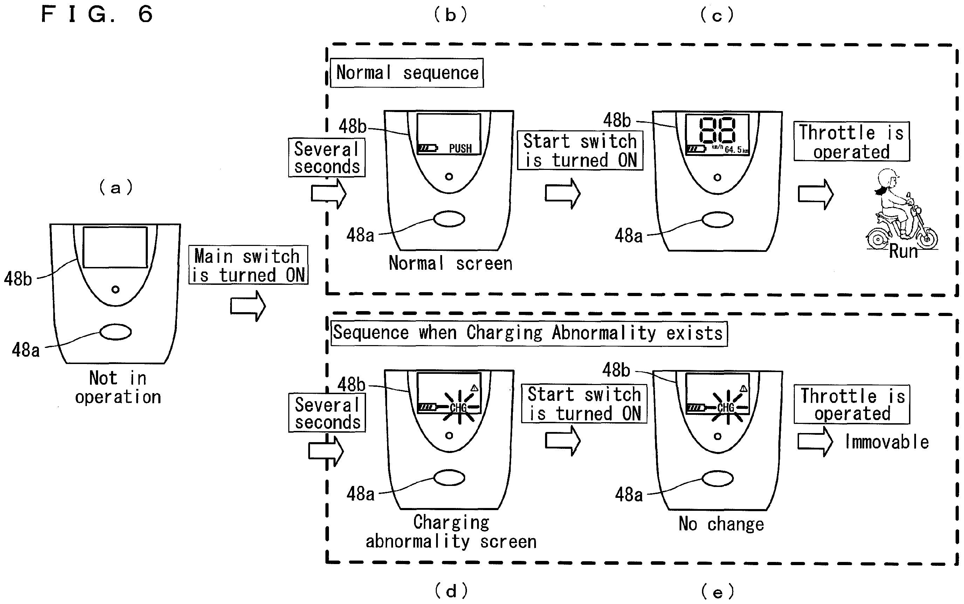

Next, an example of start-up operation of the electric motorcycle 10 will be described with reference to Fig. 5. Initially, the electric motorcycle 10 is in a shut down state, and the display in the meter 48b is as shown in Fig. 6(a).

First, the controller 40a determines whether or not the main switch 50 has been turned ON (Step S51). The program waits until the main switch 50 is turned ON, and as the main switch 50 is turned ON, the controller 40a and the DC-DC converter 46 are switched ON (Step S53). Then, the controller 40a determines whether or not there is charging abnormality information stored in the memory 40b (Step S55). If there is no charging abnormality information, the controller 40a makes the meter 48b show a normal display (Step S57). At this point, display in the meter 48b changes to the state shown in Fig. 6(b).

Then, the process determines whether or not the start switch 48a has been turned ON (Step S59). The program waits until the start switch 48a is turned ON, and as the start switch 48a is turned ON, the display in the meter 48b changes to the state in Fig. 6(c), and the controller 40a determines whether or not there is throttle operation on the throttle 52 (Step S61). The program then waits for throttle operation, and as a throttle operation is detected, the controller 40a accepts throttle signals from the throttle 52, and drives the motor 34 according to the throttle signals, thereby moving the electric motorcycle 10 (Step S63).

Thereafter, the controller 40a determines whether or not the main switch 50 has been turned OFF (Step S65). When the main switch 50 is turned OFF, the controller 40a is switched OFF, and the electric motorcycle 10 is shut down.

On the other hand, if Step S55 determines that charging abnormality information is stored in the memory 40b, the controller 40a disables the electric motorcycle 10 (Step S67), and makes the meter 48b show the charging abnormality display (Step S69). At this point, display in the meter 48b changes from the state in Fig. 6(a) to the state shown in Fig. 6(d). Specifically, if an abnormal incidence was encountered while charging the battery 42, the meter 48b displays "charging abnormality" when the electric motorcycle 10 is started up the next time.

Then, the program waits until the main switch 50 is turned OFF (Step S71). As the main switch 50 is turned OFF, the controller 40a deletes the charging abnormality information from the memory 40b (Step S73), enables the electric motorcycle 10 (Step S75), and then is switched OFF, whereby the electric motorcycle 10 is shut down.

It should be noted here that while the meter 48b gives the charging abnormality display shown in Fig. 6(d), the controller 40a accepts no operation commands other than the operation command to turn OFF the main switch 50. Specifically, turning ON the start switch 48a and/or operating on the throttle 52 do not start nor move the electric motorcycle 10, and the display in the meter 48b does not change from the state in Fig. 6(d), as illustrated in Fig. 6(e). In other words, in the case where charging abnormality information is stored in the storage, the controller does not accept any commands from the first input device nor from the second input device, except for a controller switch-off command from the first input device. Also, in the case where charging abnormality information is stored in the storage, the controller does not accept any commands from the first input device nor from the fourth input device, except for a controller switch-off command from the first input device.

If the main switch 50 is turned OFF while the charging abnormality indication in Fig. 6(d) is displayed in the meter 48b, the electric motorcycle 10 which has been disabled is enabled. Therefore, the controller 40a becomes able to accept an ON signal from the start switch 48a and operation signals from the throttle 52.

According to the operation as described above, an abnormal incidence in charging the battery 42 is first notified to the user in the form of charging abnormality indication by making the meter 48b display an abnormality notification. Under this state, start operation by turning ON the start switch 48a is not accepted. By disabling the electric motorcycle 10 so as not to start, it becomes possible to surely notify the user of the charging abnormality. Further, by disabling the electric motorcycle 10 into an immobilized state even if the user operates the throttle 52, it becomes possible, with increased certainty, that the user is notified of the charging abnormality. Therefore, the arrangement is capable of reliably notifying the user of a charging abnormality in the electric motorcycle 10 which includes the battery 42 and the battery charger 44 for on-board charging of the battery 42.

Also, the arrangement includes user involvement, i.e., the user is supposed to perform an enabling operation to the electric motorcycle 10 in order to enable the electric motorcycle 10. By demanding such an involvement by the user that he/she must perform an additional operation for enabling the motorcycle, the arrangement makes sure that the user will have a more assured recognition that something went wrong while the battery 42 was being charged.

In the operation example given above, the user should only operate the main switch 50 to issue a switch-on command for the controller 40a and then operate the switch again to issue a switch-off command, in order to issue an enable command. In this simple operation, the electric motorcycle 10 which has been disabled is easily and reliably enabled.

Also, a change from the disabled.state to the enabled state can be achieved easily by simply deleting the charging abnormality record from the memory 40b.

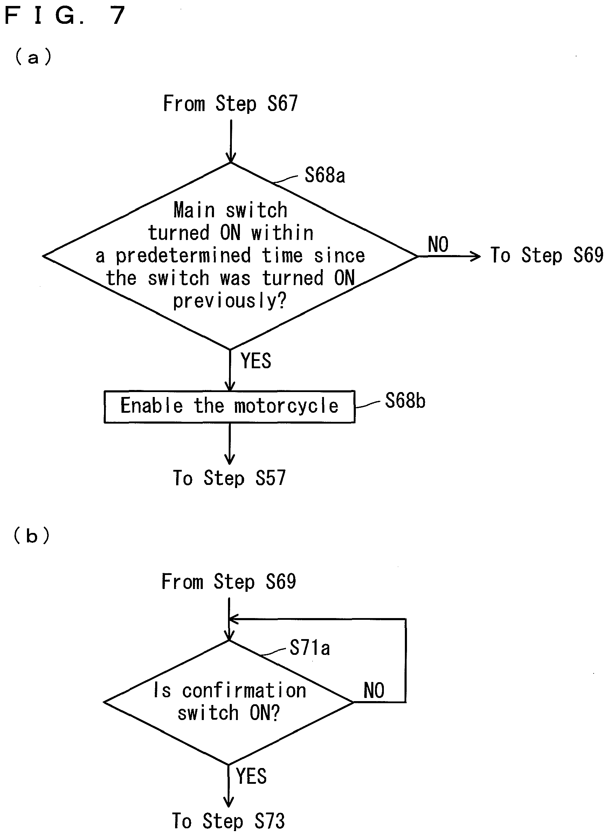

It should be noted here that a process shown in Fig. 7(a) may be performed between Step S67 and Step S69 in Fig. 5.

Fig. 7 (a) shows that in Step S68a, the controller 40a checks an amount of time elapsed from the previous moment when the main switch 50 was turned ON to the current moment when the main switch 50 was turned ON, and determines whether or not the amount of time is within a predetermined length of time (e.g. five seconds) . If it is within the predetermined length time, the controller 40a determines that the latest command from the main switch 50 is an ENABLE command, so enables the motorcycle (Step S68b), and then brings the process to Step S57. On the other hand, if the predetermined time has already elapsed, the controller 40a determines that the latest command from the main switch 50 is not an ENABLE command, and then brings the process to Step S69. If the process shown in Fig. 7(a) is included, Steps S73 through S75 are unnecessary.

With the above-described process, the user can enable the electric motorcycle 10 easily by issuing the next (i.e. current) switch-on command within a predetermined period after issuing the previous switch-on command.

Also, Step S71 in Fig. 5 may be replaced by a process shown in Fig. 7(b). In this case, the user is supposed to confirm the message that "the electric motorcycle 10 is disabled" and input his/her confirmation to the electric motorcycle 10 by operating a confirmation switch (not illustrated) which is provided in the electric motorcycle 10 independently from the main switch 50 and the start switch 48a. The confirmation switch represents the third input device.

In the process shown Fig. 7(b), Step S69 is followed by a waiting loop until the confirmation switch is turned ON (Step S71a), and after the confirmation switch is turned ON, the program moves to Step S73. If the process in Fig. 7(b) is included, Step S75 is followed by Step S57.

With the above-described process, the electric motorcycle 10 can be enabled easily by simply issuing a command from a separately provided confirmation switch.

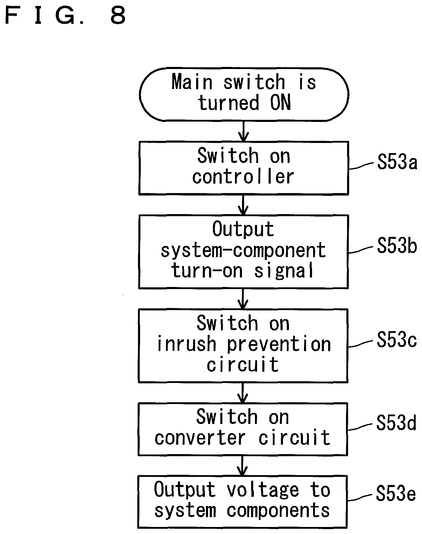

Further, Step S53 shown in Fig. 5 may include sub-steps as shown in Fig. 8.

In this case, as the main switch 50 is turned ON, the controller 40a is switched ON (Step S53a), and the controller 40a outputs a system-component turn-on signal to the DC-DC converter 46 (Step S53b) . Then, the inrush prevention circuit 46a included in the DC-DC converter 46 is switched ON (Step S53c), the converter circuit 46b included in the DC-DC converter 46 is switched ON (Step S53d), and the DC-DC converter 46 outputs a voltage to system components 62 for operation of the system components 62 (Step S53e).

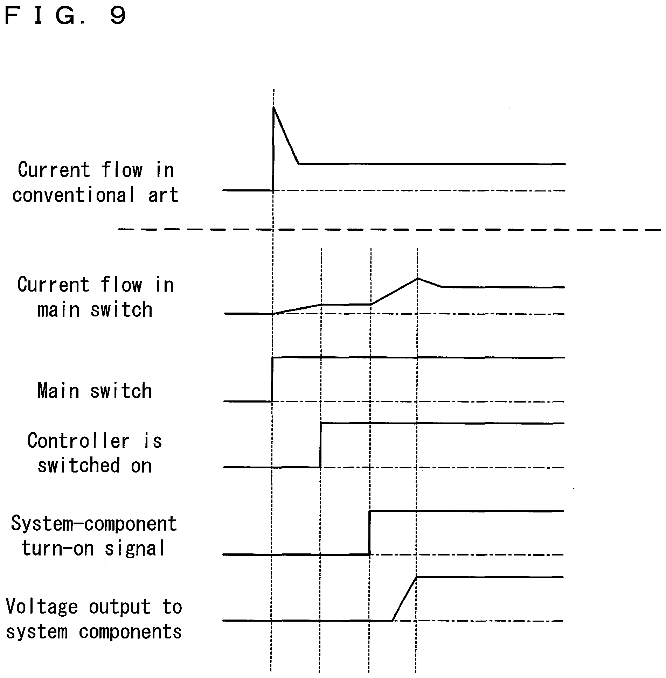

Fig. 9 shows an example timing sequence in the process shown in Fig. 8, i.e., a timing at which the main switch 50 is turned ON, a timing at which the controller 40a is switched ON, a timing at which the system-component turn-on signal is outputted, an amount of current flow of the main switch 50 and an amount of voltage outputted to the system components 62. By disposing the main switch 50 on the input side of the DC-DC converter 46, it becomes possible, as shown in Fig. 9, to gradually increase the current to be supplied to the DC-DC converter 46 unlike the conventions, and this makes it possible to reduce failure of the DC-DC converter 46.

It should be noted here that in the operation example shown in Fig. 5, Step S69 makes the meter 48b show the charging abnormality display if Step S55 finds charging abnormality information. However, Step S69 may be eliminated.

The electric motorcycle 10 need not necessarily include the start switch 48a. In this case, Step S59 in Fig. 5 may be eliminated, which provides a simpler procedure that after the main switch 50 is turned ON, operating the throttle 52 will move the electric motorcycle 10.

In the operation example shown in Fig. 7(a), Step S68a determines whether or not the length of time from the previous moment when the main switch 50 was turned ON to the current moment when the main switch 50 was turned ON is within a predetermined length of time. However, the present invention is not limited to this. For example, the program may determine whether or not the above-described length of time is shorter than a predetermined length of time.

In Fig. 7(b), the confirmation switch may not be provided. Instead, Step S71a may check, for example, whether or not the start switch 48a has been turned ON two consecutive times, in place of checking if the confirmation switch has been turned ON.

Display in the meter 48b while the battery 42 is being charged is not limited to the example given in Fig. 4.

Display in the meter 48b while the electric motorcycle 10 is being used is not limited to the example given in Fig. 6.

The present invention being thus far described in terms of preferred embodiments, it is obvious that these may be varied in many ways within the scope of the present invention. The scope of the present invention is only limited by the accompanied claims.

### LEGEND

- 10: Electric motorcycle
- 34: Motor
- 40: Vehicle control unit
- 40a: Controller
- 40b: Memory
- 42: Battery
- 44: Electric charger
- 48: Display/Operation portion
- 48a: Start switch
- 48b: Meter
- 50: Main switch
- 52: Throttle
- 54: Charger cable
- 58: External power source

## Claims

1. An electric motorcycle chargeable by an external power source (58), comprising:
a battery (42) configured to store electricity for driving the electric motorcycle (10);
an electric charger (44) configured to charge the battery (42) with electricity supplied from the external power source (58) ;
a controller (40a) configured to control operation of the electric motorcycle (10);
a first input device (50) configured to issue a command to switch on/off the controller (40a); and
a second input device (52) configured to issue a command to move the electric motorcycle (10);
**characterized by**
an abnormality determiner configured to determine whether or not there is an abnormality in charging the battery (42) by the external power source (58); and
a storage (40b) configured to store charging abnormality information as an indicator of a charging abnormality incidence upon determination by the abnormality determiner of a presence of a charging abnormality;
wherein the controller (40a) is configured to disable the electric motorcycle (10) even if a switch-on command for the controller (40a) is issued from the first input device (50) and a move command for the electric motorcycle (10) is issued from the second input device (52) as long as the charging abnormality information is stored in the storage (40b), and
wherein the controller (40a) is configured to enable the disabled electric motorcycle (10) responsive to a further command from the first input device (50) or the controller (40a) is configured to enable the disabled electric motorcycle (10) responsive to a command from a third input device, or the controller (40a) is configured to enable the disabled electric motorcycle (10) responsive to a command from a fourth input device (48a).

2. The electric motorcycle according to Claim 1, wherein the controller (40a) is configured to enable the disabled electric motorcycle (10) by deleting the charging abnormality information from the storage (40b) responsive to a switch-off command from the first input device (50) following the switch-on command.

3. The electric motorcycle according to Claim 1, wherein the controller (40a) is configured to enable the disabled electric motorcycle (10) when an amount of time elapsed from the switch-on command to a following switch-on command from the first input device (50) is within a predetermined time.

4. The electric motorcycle according to Claim 1, wherein the controller (40a) is configured to enable the disabled electric motorcycle (10) by deleting the charging abnormality information from the storage (40b) responsive to the command from the third input device.

5. The electric motorcycle according to Claim 1,
wherein the fourth input device (48a) is configured to issue a command for starting the electric motorcycle (10);
wherein the controller (40a) is configured to disable the electric motorcycle (10) even if a switch-on command for the controller (40a) is issued from the first input device (50) and a start command for the electric motorcycle (10) is issued from the fourth input device (48a) as long as the charging abnormality information is stored in the storage (40b); and
wherein the controller (40a) is configured to enable the disabled electric motorcycle (10) by deleting the charging abnormality information from the storage (40b) responsive to a start command for the electric motorcycle (10) being issued two consecutive times.

## Patentansprüche

1. Ein Elektromotorrad, das anhand einer externen Leistungsquelle (58) aufladbar ist und folgende Merkmale aufweist:
eine Batterie (42), die dazu konfiguriert ist, Elektrizität zum Antreiben des Elektromotorrads (10) zu speichern;
ein elektrisches Ladegerät (44), das dazu konfiguriert ist, die Batterie (42) mit von der externen Leistungsquelle (58) bereitgestellter Elektrizität zu laden;
eine Steuerung (40a), die dazu konfiguriert ist, den Betrieb des Elektromotorrads (10) zu steuern;
eine erste Eingabevorrichtung (50), die dazu konfiguriert ist, einen Befehl auszugeben, die Steuerung (40a) ein-/auszuschalten; und
eine zweite Eingabevorrichtung (52), die dazu konfiguriert ist, einen Befehl auszugeben, das Elektromotorrad (10) zu bewegen;
**gekennzeichnet durch**
eine Abnormalitätsbestimmungseinrichtung, die dazu konfiguriert ist, zu bestimmen, ob beim Laden der Batterie (42) durch die externe Leistungsquelle (58) eine Abnormalität vorliegt; und
ein Speicher (40b), der dazu konfiguriert ist, Ladeabnormalitätsinformationen als Indikator eines Ladeabnormalitätsvorfalls, nachdem die Abnormalitätsbestimmungseinrichtung das Vorliegen einer Ladeabnormalität bestimmt hat, zu speichern;
wobei die Steuerung (40a) dazu konfiguriert ist, das Elektromotorrad (10) sogar in dem Fall zu sperren, dass ein Einschaltbefehl für die Steuerung (40a) von der ersten Eingabevorrichtung (50) ausgegeben wird und ein Bewegungsbefehl für das Elektromotorrad (10) von der zweiten Eingabevorrichtung (52) ausgegeben wird, solange die Ladeabnormalitätsinformationen in dem Speicher (40b) gespeichert sind, und
wobei die Steuerung (40a) dazu konfiguriert ist, das gesperrte Elektromotorrad (10) ansprechend auf einen weiteren Befehl von der ersten Eingabevorrichtung (50) freizugeben, oder die Steuerung (40a) dazu konfiguriert ist, das gesperrte Elektromotorrad (10) ansprechend auf einen Befehl von einer dritten Eingabevorrichtung freizugeben, oder die Steuerung (40a) dazu konfiguriert ist, das gesperrte Elektromotorrad (10) ansprechend auf einen Befehl von einer vierten Eingabevorrichtung (48a) freizugeben.

2. Das Elektromotorrad gemäß Anspruch 1, bei dem die Steuerung (40a) dazu konfiguriert ist, das gesperrte Elektromotorrad (10) freizugeben, indem sie die Ladeabnormalitätsinformationen ansprechend auf einen Abschaltbefehl von der ersten Eingabevorrichtung (50), der auf den Einschaltbefehl folgt, aus dem Speicher (40b) löscht.

3. Das Elektromotorrad gemäß Anspruch 1, bei dem die Steuerung (40a) dazu konfiguriert ist, das gesperrte Elektromotorrad (10) freizugeben, wenn ein gewisser Zeitraum, der seit dem Einschaltbefehl bis zu einem folgenden Einschaltbefehl von der ersten Eingabevorrichtung (50) verstrichen ist, innerhalb eines vorbestimmten Zeitraums liegt.

4. Das Elektromotorrad gemäß Anspruch 1, bei dem die Steuerung (40a) dazu konfiguriert ist, das gesperrte Elektromotorrad (10) freizugeben, indem sie die Ladeabnormalitätsinformationen ansprechend auf den Befehl von der dritten Eingabevorrichtung aus dem Speicher (40b) löscht.

5. Das Elektromotorrad gemäß Anspruch 1,
bei dem die vierte Eingabevorrichtung (48a) dazu konfiguriert ist, einen Befehl zum Starten des Elektromotorrads (10) auszugeben;
bei dem die Steuerung (40a) dazu konfiguriert ist, das Elektromotorrad (10) sogar in dem Fall zu sperren, dass ein Einschaltbefehl für die Steuerung (40a) von der ersten Eingabevorrichtung (50) ausgegeben wird und ein Startbefehl für das Elektromotorrad (10) von der vierten Eingabevorrichtung (48a) ausgegeben wird, solange die Ladeabnormalitätsinformationen in dem Speicher (40b) gespeichert sind; und
bei dem die Steuerung (40a) dazu konfiguriert ist, das gesperrte Elektromotorrad (10) freizugeben, indem sie die Ladeabnormalitätsinformationen ansprechend darauf aus dem Speicher (40b) löscht, dass ein Startbefehl für das Elektromotorrad (10) zweimal hintereinander ausgegeben wird.

## Revendications

1. Motocyclette électrique rechargeable par une source d'énergie externe (58), comprenant:
une batterie (42) configurée pour accumuler de l'électricité pour entraîner la motocyclette électrique (10);
un chargeur électrique (44) configuré pour charger la batterie (42) par de l'électricité alimentée par la source d'énergie externe (58);
un moyen de commande (40a) configuré pour commander le fonctionnement de la motocyclette électrique (10);
un premier dispositif d'entrée (50) configuré pour émettre une commande d'activation/de désactivation du moyen de commande (40a); et
un deuxième dispositif d'entrée (52) configuré pour émettre une commande pour déplacer la motocyclette électrique (10);
**caractérisée par**
un moyen de détermination d'anomalie configuré pour déterminer s'il existe ou non une anomalie dans la charge de la batterie (42) par la source d'énergie externe (58); et
une mémoire (40b) configurée pour mémoriser les informations d'anomalie de charge comme indicateur d'une incidence d'anomalie de charge lors de la détermination par le moyen de détermination d'anomalie d'une présence d'une anomalie de charge;
dans laquelle le moyen de commande (40a) est configuré pour désactiver la motocyclette électrique (10) même si une commande d'activation pour le moyen de commande (40a) est émise par le premier dispositif d'entrée (50) et une commande de déplacement pour la motocyclette électrique (10) est émise par le deuxième dispositif d'entrée (52) tant que les informations d'anomalie de charge sont mémorisées dans la mémoire (40b), et
dans lequel le moyen de commande (40a) est configuré pour activer la motocyclette électrique désactivée (10) en réponse à une autre commande du premier dispositif d'entrée (50), ou le moyen de commande (40a) est configuré pour activer la motocyclette électrique désactivée (10) en réponse à une commande d'un troisième dispositif d'entrée, ou le moyen de commande (40a) est configuré pour activer la motocyclette électrique désactivée (10) en réponse à une commande d'un quatrième dispositif d'entrée (48a).

2. Motocyclette électrique selon la revendication 1, dans laquelle le moyen de commande (40a) est configuré pour activer la motocyclette électrique désactivée (10) en supprimant les informations d'anomalie de charge de la mémoire (40b) en réponse à une commande de désactivation du premier dispositif d'entrée (50) à la suite de la commande d'activation.

3. Motocyclette électrique selon la revendication 1, dans laquelle le moyen de commande (40a) est configuré pour activer la motocyclette électrique désactivée (10) lorsqu'un laps de temps écoulé de la commande d'activation à une commande d'activation suivante du premier dispositif d'entrée (50) se situe dans un laps de temps prédéterminé.

4. Motocyclette électrique selon la revendication 1, dans laquelle le moyen de commande (40a) est configuré pour activer la motocyclette électrique désactivée (10) en supprimant les informations d'anomalie de charge de la mémoire (40b) en réponse à la commande du troisième dispositif d'entrée.

5. Motocyclette électrique selon la revendication 1,
dans laquelle le quatrième dispositif d'entrée (48a) est configuré pour émettre une commande de démarrage de la motocyclette électrique (10);
dans laquelle le moyen de commande (40a) est configuré pour désactiver la motocyclette électrique (10) même si une commande d'activation pour le moyen de commande (40a) est émise par le premier dispositif d'entrée (50) et une commande de démarrage pour la motocyclette électrique (10) est émise par le quatrième dispositif d'entrée (48a) tant que les informations d'anomalie de charge sont mémorisées dans la mémoire (40b); et
dans laquelle le moyen de commande (40a) est configuré pour activer la motocyclette électrique désactivée (10) en supprimant les informations d'anomalie de charge de la mémoire (40b) en réponse à une commande de démarrage pour la motocyclette électrique (10) émise deux fois de suite.
